# EUROPÄISCHE PATENTSCHRIFT

(11) **EP 1 071 552 B1**
(45) Veröffentlichungstag und Bekanntmachung des Hinweises auf die Patenterteilung: **27.08.2003**
(21) Anmeldenummer: 99917983.1
(22) Anmeldetag: 14.04.1999
(51) Int. Cl.: B29B 17/00, B65H 75/10, B29C 44/20

(54) **VERFAHREN ZUR HERSTELLUNG VON WICKELHÜLSEN UND WICKELHÜLSE AUS KUNSTSTOFF**
METHOD FOR PRODUCING WINDING TUBES AND A WINDING TUBE CONSISTING OF PLASTIC
PROCEDE DE PRODUCTION DE MANDRINS ET MANDRINS EN PLASTIQUE

(30) Priorität: 14.04.1998 DE 19816494
(43) Veröffentlichungstag der Anmeldung: 31.01.2001
(73) Patentinhaber: MKF - Folien GmbH Minderjahn + Kiefer, 13509 Berlin (DE)
(72) Erfinder: KIEFER, Günther A., Ballybarrack House Ardee Road, County Louth (IE); BOHLMANN, Achim, D-01324 Dresden (DE)
(74) Vertreter: Marx, Lothar, Dr.
(86) Internationale Anmeldenummer: EP9902525
(87) Internationale Veröffentlichungsnummer: WO99052696

(56) Entgegenhaltungen:
- DE-A- 2 039 517
- GB-A- 1 315 585
- US-A- 4 577 998
- US-A- 4 754 537

## Beschreibung

Die vorliegende Erfindung betrifft Wickelhülsen aus Kunststoff sowie ein Verfahren zu ihrer Herstellung. Insbesondere betrifft sie Wickelhülsen aus einem PVC-Regeneratmaterial.

Gegenwärtig werden zur industriellen Fertigung von Kunststoff-Folien, insbesondere PVC-Folien, Wickelhülsen aus Pappe verwendet. Diese stellen zylindrische Hohlkörper mit einem genormten Innendurchmesser und vorgegebener Wandstärke dar. Dabei sind die Wandstärke und der Innendurchmesser so bemessen, daß die Wickelhülse die zum Trägern der Folienrolle erforderliche Stärke aufweist. Die einzelnen Folienbahnen haben üblicherweise eine Breite im Bereich von 0,5 bis 10 m und werden in Mengen von 30 kg bis 2 t, üblicherweise 100 kg bis 1 t aufgewikkelt. Diese Gewichte müssen von der Wickelhülse gehalten werden können.

Andererseits darf die Wickelhülse selbst nur ein möglichst geringes Eigengewicht, d.h. eine möglichst geringe Materialdichte, aufweisen, um keine unnötigen Transportkosten zu verursachen. Weiterhin muß die Wickelhülse feuchtigkeits- bzw. lösungsmittelbeständig sein. Schließlich muß sie sich leicht mit den üblichen Werkzeugen auf die vom Folienhersteller gewünschte Folienbreite zurechtschneiden lassen.

Die bisher im Stand der Technik üblicherweise verwendeten Wickelhülsen aus Pappe erfüllen zumindest die Kriterien eines geringen Eigengewichtes, geringer eigener Dichte (etwa 1 g/cm³), sowie hinsichtlich des einfachen Zerteilens auf die gewünschte Länge. Andererseits weisen diese Wickelhülsen erhebliche Mängel hinsichtlich ihrer Feuchtigkeits- und Lösungsmittelbeständigkeit auf. Dies führt dazu, daß die Wickelhülsen des Standes der Technik üblicherweise nach nur einer Anwendung nicht mehr zu gebrauchen sind und entsorgt werden müssen. Aufgrund des bei der Wiederaufbereitung von Zellulosefasermaterialien erforderlichen Zerkleinerungsvorgangs sowie der Chemikalien- und Temperatureinwirkung während des Wiederaufbereitungsprozesses nimmt die Stabilität des erhaltenen Materials immer weiter ab, so daß nur eine begrenzte Anzahl von Recyclingvorgängen möglich ist.

Die GB-A 1 315 585 offenbart eine Vorrichtung, umfassend eine Extrusionsdüse und eine Haftdüse spezieller Ausführung zur Extrusion von PVC-Material in Form eines Rohres. Das verwendete frische PVC-Material expandiert am Auslass der Extrusionsdüse und wird gegen die Haftdüse durch einen Innendruck im Rohr gedrückt. Gemäß diesem Dokument können die extrudierten Rohre in der Landwirtschaft, für Sanitärzwecke, für die Drainage, in der Bauindustrie oder für Fenster, Türen, Raumteiler verwendet werden.

Die US-A 4 754 537 offenbart eine Wickelhülse aus einem PVC-Material für ein Tuch. In diese Wickelhülse werden unter Aufleizen und Erweichen des PVC-Materials Endkappen eingesetzt, die einen gegenüber dem Innendurchmesser der Wickelhülse leicht vergrößerten Durchmesser aufweisen, um ein Splittern der Hülsen zu vermeiden.

Ferner ist aus der DE-A-2 039 517 eine Wickelhülse bekannt, die aus geschäumten Kunststoff, insbesondere PVC, als Spritzteil hergestellt wird.

Es ist daher Aufgabe der Erfindung, eine ohne negativen Beeinträchtigungen der optischen und mechanischen Eingenschaften aus PVC- Regeneratmaterial hergestellte Wickelhülse sowie ein Verfahren zu deren Herstellung bereitzustellen, die den bekannten Wickelhülsen aus Pappe vergleichbare Eigenschaften hinsichtlich des Eigengewichts bzw. der Dichte sowie der einfacheren Zerteilbarkeit mittels der üblicherweise verwendeten Vorrichtungen hierfür aufweist, jedoch über verbesserte Feuchtigkeits- und Lösungsmittelbeständigkeit verfügt und hinsichtlich ihrer Recyclingeigenschaften erheblich verbessert ist.

Gelöst wird diese Aufgabe durch ein Verfahren gemäß Anspruch 1 und eine Wickelhülse gemäß Anspruch 12.

PVC-Regeneratmaterial fällt bei der Wiederaufarbeitung, dem Recyceln von PVC-Hartmaterialien an. Üblicherweise werden Kunststoffe nach dem Stand der Technik zum Recyceln voneinander getrennt und jedes Material einzeln wiedergewonnen. Dies ist deshalb erforderlich, da die einzelnen Kunststoffe untereinander im geschmolzenen Zustand nicht mischbar sind und bei der Herstellung neuer Formkörper keine homogene Extrusionsmasse ergeben.

Beispielsweise führen schon kleinste Mengen an Polystyrolen, Polyethylenen, Polyterephthalaten, Polyolefinen, Polyestern und anderen Kunststoffen im zu recycelnden PVC-Material dazu, daß aus dem geschmolzenen Material hergestellte Folien Fehler und Mängel, wie Unebenheiten, Schlieren, Trübungen, Blasen, Löcher usw. aufweisen, so daß sie nicht mehr den an PVC-Folien gestellten Anforderungen hinsichtlich der Durchsichtigkeit, Luftundurchlässigkeit und Beständigkeit entsprechen. Diese fehlerhaften Folien sind damit nicht mehr verwendbar. Derartige Fehler treten bereits auf, wenn das recycelte PVC-Material lediglich < 1 Gew.-% an Verunreinigungen enthält. Weitere Verunreinigungen neben Kunststoffen können sein: Papier, Pigmente, Druckerfarbe, metallische Verunreinigungen, verbranntes PVC usw. Das fehlerhafte Folienmaterial mußte bislang meist verworfen und entsorgt werden.

Erfindungsgemäß wird nun dieses fehlerhafte PVC-Regeneratmaterial sowie anderes PVC-Hartmaterial zu einem Granulat zerkleinert, das so erhaltene Granulat geschmolzen, geschäumt und die geschäumte Schmelze zur Herstellung der Wickelhülse extrudiert.

Hierzu liegt das Regeneratmaterial vorzugsweise in Form von Folien mit einer Stärke von 150 bis 2000 µm vor. Das Regeneratmaterial kann jedoch auch in Form von Platten, Blöcken, Stäben, gröberem Granulat oder anderen Hartmaterialformen vorliegen. Die Zerkleinerung erfolgt üblicherweise durch Zermahlen (ausgehend von Folienmaterial) auf eine Fläche von maximal 0,5 cm² bei einer Dicke von 150 bis 2000 µm (entsprechend 7,5 x 10⁻³ bis 0,1 cm³). Gröbere Zermahlungsgrade sind nicht erwünscht, da dann das Aufschmelzen der Teilchen unvollständig und die Integration von Fremdbestandteilen in den Schaum nicht mehr möglich ist. Für andere Formen des Ausgangsmaterials erfolgt eine entsprechende Zerkleinerung auf vergleichbare Volumina oder Teilchengrößen.

Das Aufschmelzen selbst erfolgt in den herkömmlichen Vorrichtungen, beispielsweise auf üblichen Ein- und Doppelschneckenextrudern. Wahlweise wird das Granulat zunächst in einem Heiz-Kühl-Mischer gemischt und hier erwärmt und dann in die Extrusionsvorrichtung eingespeist. Das Aufschmelzen im Mischer erfolgt bei Temperaturen unter 120°C, um ein vorzeitiges Schäumen oder eine Reaktion des PVC-Regenerats zu vermeiden. Nach dem Aufschmelzen wird die Schmelze in den Extruder überführt und hier geschäumt. Die Temperatur liegt hierfür zwischen 160°C und 200°C.

Vorzugsweise erfolgt das Aufschmelzen und Schäumen ohne Vorschalten eines Mischers im Extruder. Die Heiztemperatur in den einzelnen Zonen liegt zwischen 160 und 200°C, vorzugsweise 170 bis 180°C, wobei eine Massetemperatur von über 175°C, vorzugsweise 180 bis 185°C und ein Massedruck von über 120 bar, vorzugsweise 140 bis 180 bar vorliegt.

Vorzugsweise erfolgt das Schäumen des Gemisches während des Aufschmelzens. Das Schäumen kann allerdings auch im Anschluß an einen Schmelzprozeß erfolgen. Das Schäumen in jedem Fall darf erst im Aufschmelzprozeß im Extruder erfolgen, damit die Schaumstruktur in der Wickelhülse erhalten bleibt.

Das Aufschäumen der Schmelze wird mit Hilfe eines Treibmittels bewirkt, das vor, während oder nach dem Aufschmelzen zugesetzt werden kann. Eingesetzt werden können sowohl exotherme oder endotherme Treibmittel als auch Gemische von exo- und endothermen Treibmitteln. Vorteilhaft eignen sich Treibmittel auf der Basis von Azodicarbonamiden, Sulfohydraziden und/oder Natriumhydrogencarbonat. Das Schäumen erfolgt durch eine Gasabspaltungsreaktion des Treibmittels in der Polymermatrix. Dieser Zersetzungsvorgang erfolgt bei höheren Temperaturen im Extruder und ist irreversibel. Dabei werden die verunreinigenden Bestandteile so in die Schaumstruktur integriert, daß keine nennenswerten negativen Beeinträchtigungen der optischen und mechanischen Eigenschaften beobachtet werden.

Die Herstellung der Wickelhülse aus dem geschmolzenen Granulat aus PVC-Regeneratmaterial kann auf üblichen Ein- und Doppelschneckenextrudern erfolgen. Erfolgt die Zudosierung des Treibmittels oder der Treibmittelmischung im Extruder, entfällt die zusätzliche Herstellung einer PVC-Mischung in einem Heiz-Kühl-Mischer. Die Richtdosierung für das Treibmittel beträgt 0,2 bis 2,0 Teile auf 100 Teile Regenerat, vorzugsweise 0,4 bis 0,8 Teile auf 100 Teile Regenerat. Eine zusätzliche Nachstabilisierung des Regenerats kann, falls erforderlich, im Extruder erfolgen. Hierzu setzt man ggf. Stabilisatoren auf Basis von Zinn-, Blei-, Calcium-Zink-Verbindungen ein.

Die Extrusion selbst erfolgt auf üblichen Ein- und Doppelschneckenextrudern, die mit einer Ringdüse im gewünschten Durchmesser versehen sind. Das Extrudat wird im Endlosformat extrudiert, ausgehärtet und nach dem Aushärten in Segmente der gewünschten Länge zerteilt.

Im Hinblick auf die Recyclingkapazität handelt es sich bei dem verwendeten Ausgangsmaterial vorzugsweise um 100 %-iges PVC-Regeneratmaterial.

Wahlweise können jedoch der Mischung bzw. dem PVC-Regeneratmaterial vor oder während des Schmelzens übliche Additive wie Füllstoffe, Flammhemmer, Antioxidantien, Weichmacher, Farbstoffe und/oder Pigmente zugesetzt werden. Wesentlich ist hierbei lediglich, daß diese die Wirkung des Treibmittels nicht nachteilig beeinträchtigen. Der Gehalt an technischen Verunreinigungen im Ausgangsmaterial, wie Fremdkunststoffen, Papierresten, verbranntem PVC, metallischen Verunreinigungen usw. beträgt maximal 50 Gew.-%, vorzugsweise maximal < < 1 Gew.-%. Bei höheren Gehalten an derartigen Verunreinigungen läßt sich eine vollständige Integration der Fremdbestandteile in die Schaumstruktur nicht mehr erzielen.

Die nach dem erfindungsgemäßen Verfahren erhaltenen Wickelhülsen weisen eine Dichte von 0,55 bis 0,95 g/cm³, vorzugsweise 0,7 bis 0,75 g/cm³ auf. Damit kann eine Gewichtsreduzierung von 40 bis 60 %, vorzugsweise 51 bis 54 %, gegenüber dem Kompaktrohr (ungeschäumtes PVC) trotz Anwendung derselben Extrusionsbedingungen und gleicher Arbeitsgeschwindigkeit erzielt werden. Falls gewünscht, können die Wickelhülsen eingefärbt und somit zur Kennzeichnung der auf sie aufgezogenen Folienmaterialien oder Papierbahnen verwendet werden. Damit sind die erfindungemä-Ben Wickelhülsen außerdem leichter als die üblichen Pappwickelhülsen mit einer Dichte von 1 g/cm³.

Aufgrund der Verwendung von PVC als Hülsenmaterial sind die erfindungsgemäßen Hülsen gegenüber Lösungsmitteln und auch höheren Luftfeuchtigkeiten beständig. Andererseits weisen sie ein identisches Gewicht bzw. identische Dichten mit den bisher verwendeten Papphülsen auf und lassen sich, ebenso wie diese, auf den herkömmlichen Hülsenschneidern verarbeiten.

Weiterhin gestattet es die Verwendung des PVC-Regenerats zur Herstellung der Wickelhülsen weiter zu verwerten. Aufgrund der Verwendung von PVC als Material sind die erfindungsgemäßen Hülsen mehrfach verwendbar und können schließlich als zermahlenes PVC-Regeneratmaterial wiederum der Herstellung neuer Hülsen zugeführt werden. Grundsätzlich steht damit ein vielfacher Recycling-Zyklus zur Verfügung.

Da das erfindungsgemäße Verfahren nicht den Einsatz von Lösungsmitteln erfordert und als Treibmittel nicht auf die üblicherweise verwendeten halogenierten Kohlenwasserstoffe zurückgreifen muß, sondern beispielsweise das umweltfreundliche Natriumhydrogencarbonat verwendet, ist das vorliegende Verfahren auch ökologisch äußerst vorteilhaft. Schließlich kann auf die in der Papieraufbereitung notwendigerweise verwendeten Bleichmittel wie Chlor und Chlordioxid verzichtet werden.

### Beispiel

Zur Herstellung der erfindungsgemäßen Wickelhülsen wurden fehlerhafte, d.h. Blasen, Schlieren oder partikuläre Verunreinigungen enthaltende PVC-Hartfolien in einer Stärke von 150 bis 2000 µm auf herkömmliche Art zermahlen. Das erhaltene Granulat wies Teilchen in der Größe von staubförmigem Material bis zu einer Fläche von 0,5 cm² auf. Das Zermahlen erfolgte in einem Granulator.

Das erhaltenen Material wurde mit Azodicarbonat als Treibmittel in einer Menge von 0,8 Teilen Treibmittel auf 100 Teile Regenerat versetzt und in einem Einschneckenextruder aufgeschmolzen. Die Heiztemperatur betrug in den einzelnen Zonen 170 bis 180°C, wobei eine Massetemperatur von 181 bis 182°C und ein Massedruck von 140 bis 160 bar gemessen wurden. Während des Aufschmelzens wurde das Material aufgeschäumt und somit dessen Dichte verringert.

Schließlich wurde der so erhaltene PVC-Schaum durch eine Ringdüse mit einem Innendurchmesser von 7,6 cm und einer Spaltweite, entsprechend der Wandstärke, von 6 mm endlos extrudiert und das Extrudat ausgehärtet durch schnelle Abkühlung mit Wasser.

Die erhaltenen PVC-Rohre wurden mit üblichen Hülsenschneidern auf 2 m Länge zurechtgeschnitten und können als Wickelhülsen unmittelbar verwendet werden.

Die erfindungsgemäßen Wickelhülsen wurden hinsichtlich ihrer Beständigkeit im Vergleich zu den im Stand der Technik verwendeten Papphülsen wie folgt getestet:

Beide Hülsen wurden aus einer Höhe von 2 m fallengelassen und zwar sowohl entlang als auch quer zu ihrer Längsachse.

Während die bisher verwendeten Papphülsen nach einer derartigen Behandlung insbesondere beim Fallen entlang ihrer Längsachse leichte Dellen oder Schäden aufwiesen, waren bei den erfindungsgemäßen Hülsen keinerlei Veränderungen zu erkennen.

Parallel hierzu wurden die erfindungsgemäßen Wickelhülsen wie auch Papphülsen einem Feuchtigkeitstest unterzogen, bei dem beide Hülsen für die Dauer von 3 Tagen einer feuchten Umgebung ausgesetzt wurden. Im Ergebnis blieben die erfindungsmäßen Wickelhülsen unverändert, während die bisher verwendeten Papphülsen einen erheblichen Abfall der mechanischen Eigenschaften aufweisen und nicht mehr verwendbar waren.

## Patentansprüche

1. Verfahren zur Herstellung von Wickelhülsen, bei dem man ein PVC-Regeneratmaterial zu einem Granulat zerkleinert, das so erhaltene Granulat aufschmilzt, schäumt und die geschäumte Schmelze zu einem Rohr extrudiert, das Extrudat aushärtet und nach dem Aushärten in Segmente der gewünschten Länge zerteilt.

2. Verfahren gemäß Anspruch 1, bei dem das PVC-Regeneratmaterial aus recyceltem PVC-Material besteht, welches in Form von Folien, Blöcken oder anderen Hartmaterialien vorliegen kann.

3. Verfahren gemäß einem der vorstehenden Ansprüche, bei dem das PVC-Regenerat in zermahlenem Zustand bei einer maximalen Fläche von bis zu 0,5 cm² eine Dicke von 150 bis 2000 µm aufweist.

4. Verfahren gemäß einem der vorstehenden Ansprüche, bei dem das PVC-Regenerat Verunreinigungen in Form anderer Kunststoffe, von Papier, verbranntem PVC oder metallischen Verunreinigungen in einer Menge von maximal 50 Gew.-% enthält.

5. Verfahren gemäß einem der vorstehenden Ansprüche, bei dem das Aufschmelzen bei Temperaturen in den einzelnen Heizzonen von 160 bis 200°C erfolgt.

6. Verfahren gemäß einem der vorstehenden Ansprüche, bei dem die Schmelze während des Aufschmelzens geschäumt wird.

7. Verfahren gemäß einem der vorstehenden Ansprüche, bei dem das Treibmittel vor oder während des Aufschmelzens zugesetzt wird.

8. Verfahren gemäß einem der vorstehenden Ansprüche, bei dem das Treibmittel in einer solchen Menge zugesetzt wird, daß das ausgehärtete Extrudat eine Dichte im Bereich von 0,55 bis 0,95 g/cm³ hat.

9. Verfahren gemäß Anspruch 7, **dadurch gekennzeichnet, daß** es sich bei dem Treibmittel um Azodicarbonamide, Sulfohydrazide und/oder Natriumcarbonat handelt.

10. Verfahren gemäß einem der vorstehenden Ansprüche, **dadurch gekennzeichnet, daß** die Extrusion mit einer Ringdüse mit den gewünschten Außen- bzw. Innen durchmessern erfolgt und das Extrudat nach dem Aushärten in Segmente der gewünschten Länge zerteilt wird.

11. Verfahren gemäß einem der vorstehenden Ansprüche, **dadurch gekennzeichnet, dass** dem Granulat und/oder der Schmelze herkömmliche Additive wie Füllstoffe, Flammhemmer, Antioxidantien, Weichmacher, Farbstoffe und/oder Pigmente zugesetzt werden.

12. Wickelhülse aus einem extrudierten und ausgehärteten PVC-Regeneratmaterial, herstellbar gemäß dem Verfahren nach einem der Ansprüche 1 bis 11.

13. Wickelhülse gemäß Anspruch 12, **dadurch gekennzeichnet, dass** sie eine Dichte von 0,55 bis 0,95 g/cm³ aufweist.

14. Wickelhülse gemäß einem der Ansprüche 12 bis 13, die in Form eines zylindrischen Hohlkörpers mit einem Innendurchmesser von 6 bis 25 cm und einer Wandstärke von 1,5 bis 14 mm vorliegt.

15. Wickelhülse gemäß Anspruch 14, die einen Innendurchmesser von 7 bis 8 cm und eine Wandstärke von 3 bis 10 mm aufweist.

16. Wickelhülse gemäß einem der Ansprüche 12 bis 15, **dadurch gekennzeichnet, dass** sie neben dem PVC-Regenratmaterial übliche Additive wie Füllstoffe, Flammhemmer, Antioxidantien, Weichmacher, Farbstoffe und/oder Pigmente enthält.

17. Wickelhülse gemäß einem der Ansprüche 12 bis 16, die eine Länge von 10 cm bis 5 m, vorzugsweise 1,5 bis 2,5 m aufweist.

## Claims

1. A method for producing winding tubes, wherein a PVC regenerate material is comminuted to a granulate, the granulate thus obtained is melted, foamed and the foamed molten mass is extruded into a pipe, the extrudate is cured and, once cured, separated into segments of the desired length.

2. The method in accordance with claim 1, wherein the PVC regenerate material consists of recycled PVC material which can be provided in the form of foils, blocks or other hard materials.

3. The method in accordance with any one of the preceding claims, wherein the PVC regenerate, when ground down, exhibits a thickness of 150 to 2000 µm at a given maximum area of up to 0.5 cm².

4. The method in accordance with any one of the preceding claims, wherein the PVC regenerate contains contaminants, in the form of other plastics, paper, combusted PVC or metallic contaminants, in the amount of at most 50 % by weight.

5. The method in accordance with any one of the preceding claims, wherein the material is melted at temperatures in the individual heating zones of 160 to 200°C.

6. The method in accordance with any one of the preceding claims, wherein the molten mass is foamed during melting.

7. The method in accordance with any one of the preceding claims, wherein the blowing agent is added before or during melting.

8. The method in accordance with any one of the preceding claims, wherein the blowing agent is added in an amount such that the cured extrudate has a density in the range of 0.55 to 0.95 g/cm³.

9. The method in accordance with claim 7, **characterised in that** the expanding agent is azo dicarboxylic amides, sulphonic hydrazides and/or sodium hydrogen carbonate.

10. The method in accordance with any one of the preceding claims, **characterised in that** the material is extruded using an annular nozzle having the desired outer and inner diameters, and respectively **in that** the extrudate, once cured, is separated into segments of the desired length.

11. The method in accordance with any one of the preceding claims, **characterised in that** conventional additives such as fillers, flame retardants, antioxidants, plastizisers, dyes and/or pigments are added to the granulate and/or the melt.

12. A winding tube consisting of an extruded and cured PVC regenerate material, which may be produced in accordance with the method as set forth in any one of claims 1 to 11.

13. The winding tube in accordance with claim 12, **characterised in that** it exhibits a density of 0.55 to 0.95 g/cm³.

14. The winding tube in accordance with any one of claims 12 to 13, which is provided in the form of a cylindrical hollow body having an inner diameter of 6 to 25 cm and a wall thickness of 1.5 to 14 mm.

15. The winding tube in accordance with claim 14, having an inner diameter of 7 to 8 cm and a wall thickness of 3 to 10 mm.

16. The winding tube in accordance with any one of claims 12 to 15, **characterised in that** it contains, aside from the PVC regenerate material, common additives such as filler, flame retardants, antioxidants, plasticiser, dyes and/or pigments.

17. The winding tube in accordance with any one of claims 12 to 16, having a length of 10 cm to 5 m, preferably 1.5 to 2.5 m.

## Revendications

1. Procédé de fabrication de mandrins dans lequel on fragmente une matière de PVC régénérée en un granulat, on fait fondre le granulat obtenu, on l'expanse et on extrude la matière fondue expansée en un tube, on fait durcir le produit extrudé et après durcissement, on le divise en segments de longueur voulue.

2. Procédé selon la revendication 1, dans lequel la matière de PVC régénérée est constituée de matière de PVC recyclée qui peut se trouver sous la forme de feuilles, de blocs ou d'autres matériaux durs.

3. Procédé selon l'une des revendications précédentes, dans lequel le PVC régénéré à l'état broyé présente une épaisseur de 150 à 2 000 µm pour une surface maximale de 0,5 cm².

4. Procédé selon l'une des revendications précédentes, dans lequel le PVC régénéré contient des impuretés sous la forme d'autres matières plastiques, de papier, de PVC brûlé ou d'impuretés métalliques en une quantité de 50 % en poids au maximum.

5. Procédé selon l'une des revendications précédentes, dans lequel la fusion s'effectue à des températures dans les différentes zones de chauffage de 160 à 200 °C.

6. Procédé selon l'une des revendications précédentes, dans lequel la matière fondue est expansée pendant la fusion.

7. Procédé selon l'une des revendications précédentes, dans lequel l'agent moussant est ajouté avant ou pendant la fusion.

8. Procédé selon l'une des revendications précédentes, dans lequel l'agent moussant est ajouté en une quantité telle que le produit extrudé durci présente une densité comprise entre 0,55 et 0,95 g/cm³.

9. Procédé selon la revendication 7, **caractérisé en ce que** l'agent moussant est de l'azodicarbonamide de la sulfohydrazide et/ou du carbonate de sodium.

10. Procédé selon l'une des revendications précédentes, **caractérisé en ce que** l'extrusion s'effectue avec une filière annulaire présentant les diamètres extérieurs ou intérieurs voulus et le produit extrudé est divisé après durcissement en segments de longueur voulue.

11. Procédé selon l'une des revendications précédentes, **caractérisé en ce qu'**on ajoute au granulat et/ou à la matière fondue des additifs classiques tels que des charges, des substances anti-feu, des antioxydants, des plastifiants, des colorants et/ou des pigments.

12. Mandrin constitué d'une matière de PVC régénérée, extrudée et durcie, pouvant être fabriqué selon le procédé des revendications 1 à 11.

13. Mandrin selon la revendication 12, **caractérisé en ce qu'**il présente une masse volumique de 0,55 à 0,95 g/cm³.

14. Mandrin selon l'une des revendications 12 ou 13 qui se présente sous la forme d'un corps creux cylindrique d'un diamètre intérieur de 6 à 25 cm et d'une épaisseur de paroi de 1,5 à 14 mm.

15. Mandrin selon la revendication 14, qui présente un diamètre intérieur de 7 à 8 cm et une épaisseur de paroi de 3 à 10 mm.

16. Mandrin selon l'une des revendications 12 à 15, **caractérisé en ce qu'**il contient, outre la matière de PVC régénérée, des additifs usuels tels que des charges, des substances anti-feu, des antioxydants, des plastifiants, des colorants et/ou des pigments.

17. Mandrin selon l'une des revendications 12 ou 16, qui présente une longueur de 10 cm à 5 m, de préférence de 1,5 à 2,5 m.
